# EUROPEAN PATENT APPLICATION

(11) **EP 2 014 424 A1**
(43) Date of publication of application: **14.01.2009**
(21) Application number: 08015876.9
(22) Date of filing: 13.09.2004
(51) Int. Cl.: B25H 3/02

(54) **Inventory control system, process & container**

(30) Priority: 17.09.2003 GB 0321743; 11.11.2003 GB 0326302; 16.03.2004 GB 0405983
(62) Divisional of application: 04768458.4
(71) Applicant: COPLAN LIMITED, Tongwell, Milton Keynes MK15 8HQ (GB)
(72) Inventor: King, Roy Derrick, Bedford MK43 8AL (GB)
(74) Representative: Morris, Jonathan Paul

(57) **Abstract**

An inventory control system for monitoring the removal and replacement of inventory items, the system including a plurality of inventory item storage locations each for receiving a specific inventory item, a sensor system arranged to generate an image of the inventory items, a data processing device arranged to receive signals from the sensor system, and comparator means for comparing the generated image with previous images to determine the presence and/or absence of the inventory items in the storage locations.

An inventory item container for use in an inventory control system and an inventory control process are also disclosed.

## Description

The present invention relates to an inventory control system and in particular, but not exclusively, to an inventory control system for monitoring the use of hand tools. The invention also relates to a storage container for use with the inventory control system, and an inventory control process.

An inventory control system may be useful when it is important to monitor the usage of hand tools, and to ensure that they are returned to storage after use. This can help to ensure that tools are not lost or stolen. Such a system is particularly important when tools are used for repairing or maintaining aircraft engines, as any tools left inside the engine after completion of the job could cause catastrophic damage. Similarly, in the case of surgical tools, it is essential to ensure that no tools are left inside a patient after an operation.

An inventory control system can also be useful by helping to ensure that only the correct tools are used for a particular task. Such a system may also be helpful to track the identity of the person using the tools, so that if a tool goes missing or if a tool is taken that is inappropriate for the task in hand, appropriate remedial action can be taken.

One method of monitoring the use of tools is to store the tools in a container having designated storage compartments for specific tools. For example, the container may be a tool box having drawers with rigid foam liners, with cut-outs matching the size and shape of the tools. Using such a container, it is a relatively simple matter for a supervisor to check that all the tools are present by looking at each drawer in turn, to ensure that all the spaces are filled. However, this is time-consuming and laborious, and it does not allow use of the tools to be monitored on a continuous or real-time basis. In addition, the correct choice of tools for a specific task cannot easily be monitored, and the identity of the user is not automatically recorded.

US 5608193 describes an alternative tool inventory control system, in which a tool box containing tools is weighed before and after use. Discrepancies between the two weights are noted and optionally a database of tool weights can be interrogated to suggest which tool may have been left behind. The system does not however allow the presence of each individual tool to be verified or the choice of tools taken for a particular task to be monitored.

It is an object of the present invention to provide an inventory control system and process, which mitigates at least some of the aforesaid disadvantages.

According to the present invention there is provided an inventory control system for monitoring the removal and replacement of tools, the system including a container having a plurality of tool storage locations, each tool storage location comprising an individually-shaped recess for receiving a specific tool, the shape of the recess being matched to the shape of the tool, sensing means including a plurality of sensors for sensing the presence of tools in the tool storage locations, each sensor being located adjacent a recess for sensing the presence of a tool in the recess, a data processing device constructed and arranged to receive signals from the sensing means and monitor the removal and replacement of tools, and an output device for indicating the presence and/or absence of tools in the container.

The system monitors which tools have been removed from and replaced in the container, and indicates the presence and/or absence of the tools. This makes it easy to assess whether all the tools taken from the container have been returned after use, thus reducing the risk of any tools being inadvertently left behind. Safety in critical situations such as aircraft engine maintenance is thus significantly improved. The invention also reduces the risk of tools being lost or stolen, since the fact that a tool has gone missing can be indicated immediately. The system also makes it possible to monitor which tools are being taken for any specified task, thereby helping to ensure best practice in maintenance operations.

The tool storage locations comprise a set of individually-shaped recesses for receiving the tools, thus ensuring that tools are always returned to the correct storage locations. This makes it possible for the system to identify which tools have been removed, without requiring the use of sophisticated sensors and tagging devices on the tools. It also allows a visual check of the tools to be completed very easily, by looking for any empty recesses. This provides a manual backup to the automatic system, allowing the full complement of tools to be confirmed easily, even in the event of a power failure or other fault. Preferably, the recesses are colour-coded, to simplify further the visual checking process.

The sensing means includes a plurality of sensors, each for sensing the presence of an individual tool. The sensors are located adjacent the recesses. At least some of the sensors may consist for example of magnetic sensors, for sensing the presence of ferromagnetic materials. Such sensors have the advantage of being cheap, robust and simple.

The container may consist of a cabinet having one or more tool storage drawers. The container may include a locking mechanism for controlling access to the tools. The locking mechanism may include an input device for entering the identity of a user, and the data processing device may include means for recording the identity of a user. This makes it possible to monitor the tool usage of individual workers and ensure best working practices. Also, if a tool goes missing, it is possible to identify who last had possession of that tool.

Advantageously, the data processing device includes means for recording the time of removal and replacement of tools. The data processing device is preferably a computer. The data processing device may be located remotely from the container and may be connected to the container by a data link, for example a wired link, an optical link (e.g. using infrared light) or a radio link. The data processing device may also be positioned locally, for use in the workplace. Alternatively, the container may include a local indicator device for indicating the presence and/or absence of tools in the container.

According to another aspect of the invention, there is provided a tool container for use in an inventory control system according to any one of the preceding statements of invention, the tool container including a plurality of tool storage locations, each tool storage location comprising an individually-shaped recess for receiving a specific tool, the shape of the recess being matched to the shape of the tool, sensing means including a plurality of sensors for sensing the presence of tools in the tool storage locations, each sensor being located adjacent a recess for sensing the presence of a tool in the recess, and means for transmitting signals representing the presence or absence of tools in the tool storage locations from the sensing means to a data processing device.

The tool storage locations comprise a set of individually-shaped recesses for receiving the tools, thus ensuring that tools are always returned to the correct storage locations. This makes it possible for the system to identify which tools have been removed, without requiring the use of sophisticated sensors and tagging devices on the tools.

The sensing means include a plurality of sensors for sensing the presence of individual tools, which are located adjacent the recesses. Some of the sensors may consist of magnetic sensors.

Advantageously, the transmitting means is constructed and arranged to transmit signals to a remote data processing device.

The container may include a local indicator device for indicating the presence and/or absence of tools in the container.

The container may consist of a cabinet having one or more tool storage drawers. The container may include a locking mechanism for controlling access to the tools, which may include an input device for entering the identity of a user.

According to another aspect of the invention, there is provided an inventory control process for monitoring the removal and replacement of tools or other items in a container having a plurality of tool storage locations, each tool storage location comprising an individually-shaped recess for receiving a specific tool, the shape of the recess being matched to the shape of the tool, and sensing means including a plurality of sensors for sensing the presence of tools in the tool storage locations, each sensor being located adjacent a recess for sensing the presence of a tool in the recess, the process including sensing the presence of tools in a plurality of tool storage locations in the container, monitoring signals from the sensing means, recording the removal and replacement of tools, and indicating the presence and/or absence of tools in the container.

The process may include sensing each of the tool storage locations separately and identifying tools removed from and replaced in the container according to the sensed locations.

The presence of tools in the tool storage locations may be detected magnetically.

Advantageously, the time of removal and replacement of tools is recorded.

The process may include detecting and recording the identity of a user of the tools, and may include checking the identity of a prospective user against a list of authorised users and allowing access to the tools only if the prospective user is authorised.

An embodiment of the invention will now be described, by way of example, with reference to the accompanying drawings, in which:
Figure 1 is an isometric view of a tool cabinet with an open tool drawer;
Figure 2 is an isometric view from above of the drawer shown in Figure 1;
Figure 3 is an isometric view of the tool cabinet from the rear;
Figure 4 is a plan view showing the layout of another tool drawer;
Figure 5 is a view from below, showing the layout of tool sensors in the drawer shown in Figure 4;
Figure 6 is a schematic diagram illustrating the main components of an inventory control system; and
Figure 7 is a flow diagram showing the main steps of an inventory control process.

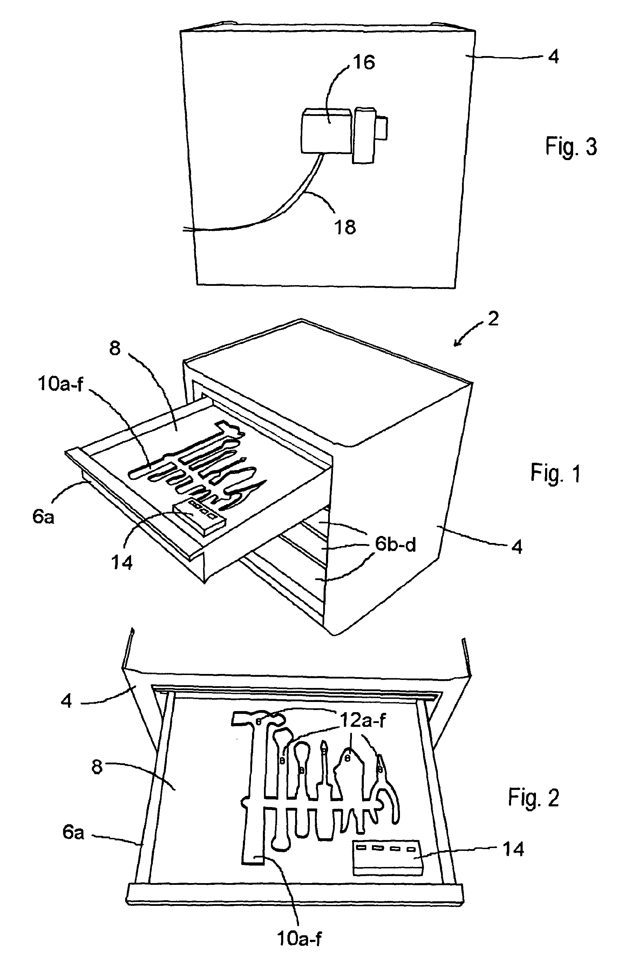

The tool cabinet 2 shown in Figures 1-3 includes a steel cabinet housing 4, which may be static or mobile (for example, it may be mounted on castors). The cabinet includes four tool drawers 6a-6d, the top drawer 6a being shown pulled out. Each drawer includes a liner 8, for example of a rigid foam material, having a number of cut-out compartments (or recesses) 10a-10f, which are shaped to receive specific tools. The recesses are preferably colour-coded, to provide a simple visual indication that a tool has been removed. For example, the recesses may have a bright colour (e.g. yellow), while the top surface of the drawer liner has a contrasting colour (e.g. black).

Within or adjacent to each compartment 10, a sensor 12a-12f is provided, which senses the presence in the compartment of a tool. The sensors may for example be Hall effect sensors, to detect the ferromagnetic materials such as iron or steel, from which most tools are made. Alternatively, other types of sensor can be used, including for example optical sensors, mechanical contact switches and so on.

The sensors 12 are connected to an input/output unit 14 mounted in the drawer, which may optionally include a visual display to show which tools are present. The input/output unit 14 is in turn connected to a control unit 16 mounted on the rear of the cabinet. The control unit 16 is connected to receive signals from the sensors 12 via the input/output unit 14, and has an output cable 18 for transmitting signals to a computer having database software for maintaining an inventory of the tools in the cabinet. Alternatively, the control unit 16 can be connected to the computer wirelessly, for example via an infrared, radio or GSM link. The computer (not shown) may be kept locally or at a remote location.

The tool cabinet 2 also includes an electrically operated lock for the drawers, which can be actuated using a key, a personal identification number (PIN) or a swipe card containing data identifying the user. This allows the identity of the user to be monitored.

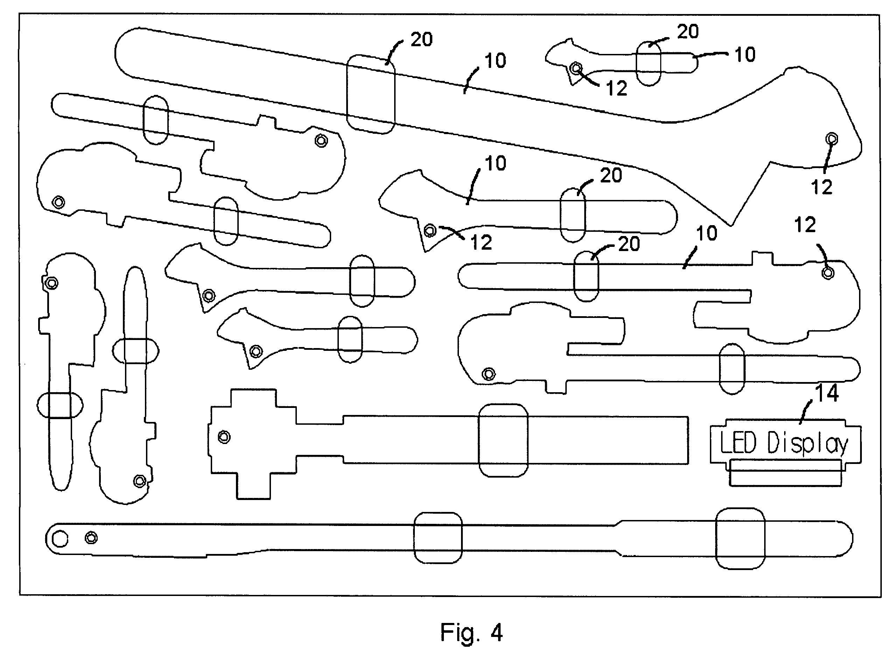

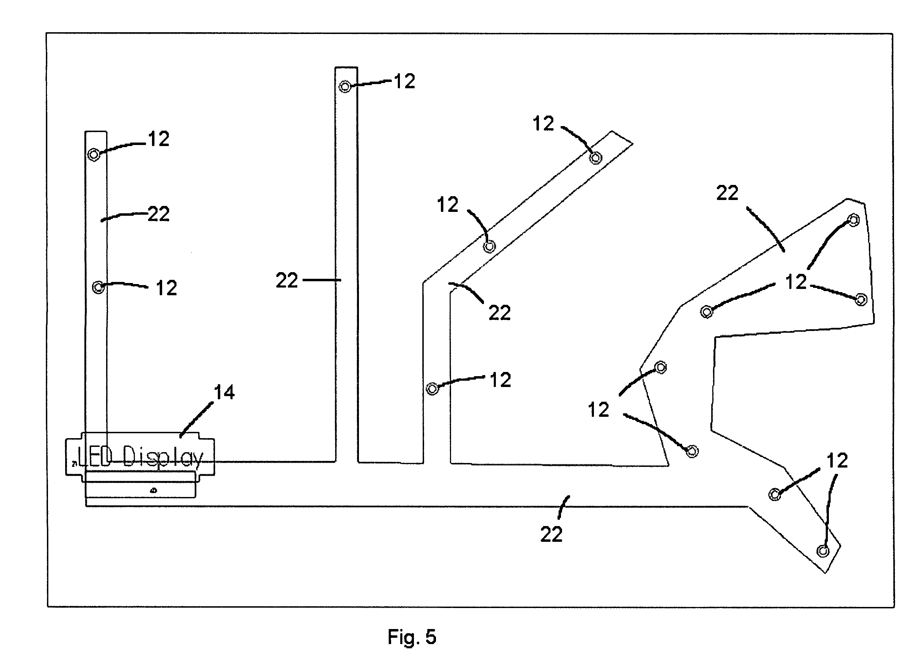

Figure 4 shows an alternative drawer layout, with a number of tool compartments 10 and sensors 12, as well as an input/output unit 14 with an LED display. Each of the compartments also includes a finger recess 20, allowing the tool to be easily removed from or replaced in the appropriate recess 10. The sensors 12 and the input/output unit 14 are interconnected by means of a printed circuit 22, as shown in Figure 5.

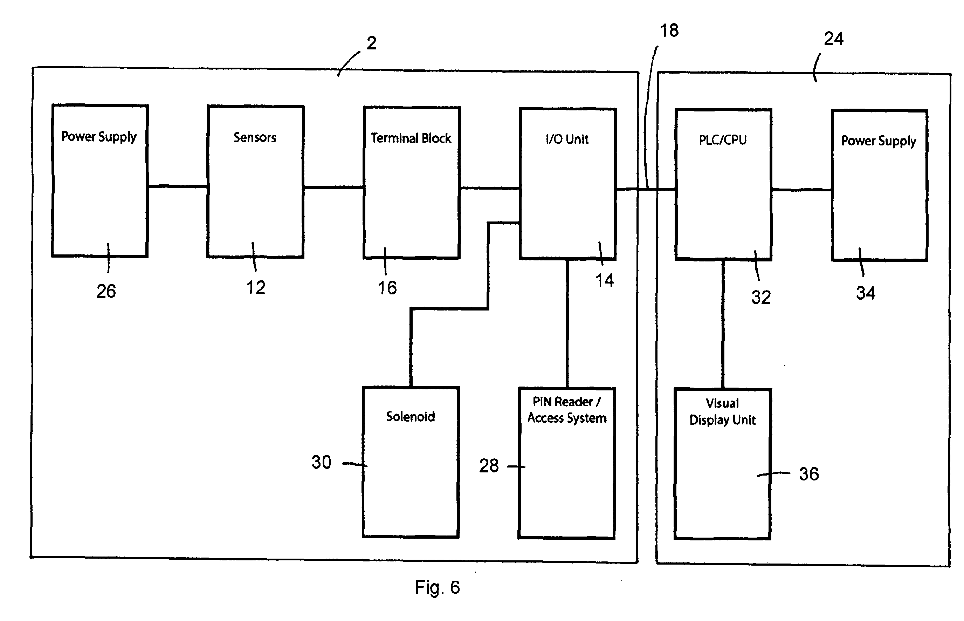

The main components of an inventory control system are shown schematically in Figure 6. The system includes the tool cabinet 2 and a computer 24, which is connected to the cabinet 2 via the link 18. The cabinet 2 includes the sensors 12, the input/output unit 14 and control unit 16. It also includes a power supply 26, an access control system 28 (for example a swipe card reader, a PIN reader or a key lock) and a solenoid 30, for operating electrical locks on the tool drawers. The computer 24 includes a central processing unit 32, a power supply 34 and a visual display unit 36.

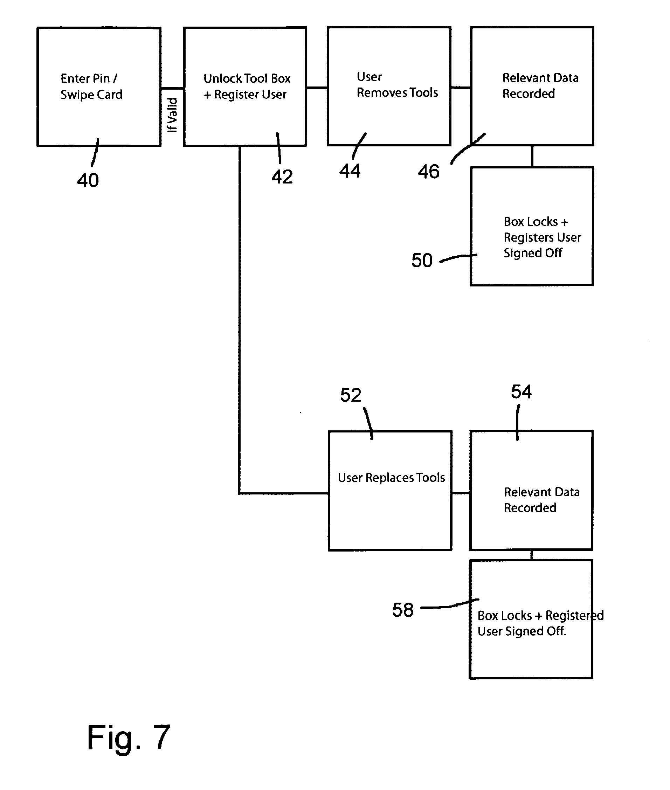

An inventory control process carried out using the system described above will now be described with reference to Figure 7, which shows the steps of a typical control process. First, a user (for example a technician or mechanic) identifies him or herself 40 by entering a PIN or using a swipe card. The identity of the user is checked against a list of authorised users held on the computer 24 and, if the authorisation of the user is valid, the locks of the tool box are unlocked, allowing the user to gain access to the tools. At the same time, the identity of the user and the time are recorded 42 in a database on the computer. If the identity of the user is not validated as that of an authorised user, the tool box remains locked, preventing access to the tools. Optionally, a warning may be sent to the computer, to indicate that an unauthorised person has attempted to gain access.

Assuming that the identity of the user has been validated, the user then removes the required tools from the cabinet and the sensors automatically detect 44 which tools have been removed. This information is transmitted to the computer, where it is recorded 46, together with the time of removal. The user then closes the cabinet and, after a short delay, the box then re-locks automatically 50, and the registered user is signed off.

After completing the assigned task, the user re-enters his or her ID 40, and once this has been verified the box unlocks 42 and the identity of the user is registered on the computer. The user then replaces the tools 52 in the appropriate recesses: this is sensed by the sensors and the identity of the tools that have been replaced is recorded on the computer 54, together with the time of replacement. The user then again closes the cabinet and, after a short delay, the box re-locks and the user is logged off.

The computer therefore records which tools are in use, who has taken them and the time at which the tools are removed and returned. Using this information, it is a simple matter for a supervisor to check whether all the tools are present in the cabinet and, if any are missing, who has taken them and when. The supervisor can also check that the tools taken for a particular task are appropriate for that task. Checks can be carried out by the supervisor whenever required, or they can be instigated automatically, for example whenever the cabinet is opened or at predetermined intervals. In addition, the tool cabinet can be checked visually at regular intervals, to ensure that the full complement of tools is present and that the automatic system is operating correctly.

The computer can also keep a continuous log of how long each tool has been in use, which may be useful for tools and measuring instruments such as torque wrenches that have to be recalibrated at preset intervals. It can also be programmed to disregard the absence of tools that have been removed deliberately for repair or replacement.

It may be noted that although the system checks for the presence of a tool in each of the sensed recesses, it does not check that the correct tool has been placed in each recess. In fact, since in the embodiment described above the detectors are simple magnetic detectors, it would be relatively easy to mislead the detection system, for example by placing a steel bolt in one of the recesses instead of the correct tool. This is not considered to be a serious disadvantage, since the main aim of the system is to ensure that trusted personnel do not accidentally forget to return tools to the container after use, rather than preventing deliberate theft. However, it is worth noting that since the system also records who has taken each tool from the container, this will deter deliberate theft, particularly if regular visual inspections of the cabinet are also carried out.

If necessary, the system can be adapted to include more sophisticated sensors that are capable of detecting the presence of individual tools, for example by detecting identification tags attached to the tools. However, this is generally less preferred, since it increases the cost and complexity of the system and gives rise to other disadvantages, such as the difficulty of attaching tags to the tools and the risk of the tags becoming detached during use. The simple system described first is likely therefore to be preferred in many situations.

Various other modifications of the invention are of course possible. For example, instead of using magnetic sensors to detect the presence of tools in each of the recesses, other types of sensor such as optical sensors or mechanical switches may be used. Alternatively, instead of providing a separate sensor for each recess, the cabinet may include an array of optical sensors mounted above each drawer, which scan the drawer as it is opened, in a manner similar to a conventional optical scanner. An image of the drawer can then be generated, which can be compared with previous images to sense the removal of tools from the recesses or their replacement in the recesses. Alternatively, instead of optical sensors, an array of magnetic sensors can be used to scan the drawer as it is opened.

The tool container may also take different forms: for example it may consist of a box with a single layer of tools, or with tools in removable trays, or it may take the form of a cupboard or a board on or within which the tools are hung, or any other suitable form. The tools may also of course be of any kind, including engineering tools, surgical tools and so on. The invention may also be adapted to other non-tool applications where an inventory control system is required, and references within this specification to tools should be construed accordingly to include equivalent items in suitable non-tool applications. The invention may for example be used for inventory taking or stock taking/control purposes.

## Claims

1. An inventory control system for monitoring the removal and replacement of inventory items, the system including a plurality of inventory item storage locations each for receiving a specific inventory item, a sensor system arranged to generate an image of the inventory items, a data processing device arranged to receive signals from the sensor system, and comparator means for comparing the generated image with previous images to determine the presence and/or absence of the inventory items in the storage locations.

2. An inventory control system according to claim 1, wherein the inventory item storage locations are located in a container and the sensor system and comparator means are arranged to determine the presence and/or absence of the inventory items in the container.

3. An inventory control system according to claim 1 or 2, wherein each inventory item storage location comprises an individually-shaped recess for receiving a specific inventory item, the shape of the recess being matched to the shape of the inventory item.

4. An inventory control system according to any one of the preceding claims, wherein the sensor system includes an array of sensors.

5. An inventory control system according to any one of the preceding claims, wherein the sensor system is arranged to scan the inventory items in the storage locations to produce the image.

6. An inventory control system according to claims 4 and 5, wherein the container includes at least one drawer and the array of sensors is mounted above the drawer, the arrangement being such that the inventory items located in the drawer are scanned when there is relative movement between the drawer and the array of sensors.

7. An inventory control system according to any one of the preceding claims, wherein the sensor system includes optical or magnetic sensors.

8. An inventory control system according to any one of the preceding claims, including a locking mechanism for controlling access to the inventory items, wherein the locking mechanism includes an input device for entering the identity of a user and the data processing device includes means for recording the identity of a user.

9. An inventory control system according to any one of the preceding claims, wherein the data processing device includes means for recording the time of removal and replacement of inventory items.

10. An inventory control system according to any one of the preceding claims, wherein the data processing device is located remotely from the container and is connected to the container by a data link.

11. An inventory item container for use in an inventory control system, said container having, a plurality of inventory item storage locations each for receiving a specific inventory item, a sensor system arranged to generate an image of the inventory items, means for sending signals from the sensor system to a data processing device, said data processing device including comparator means for comparing the generated image with previous images to determine the presence and/or absence of the inventory items in the storage locations.

12. An inventory item container according to claim 11, wherein the inventory item storage locations are each for receiving a specific inventory item, wherein each inventory item storage location comprises an individually-shaped recess for receiving a specific inventory item, the shape of the recess being matched to the shape of the inventory item.

13. An inventory item container according to any one of claims 11 or 12, wherein the sensor system includes at least one array of sensors.

14. An inventory item container according to any one of claims 11 to 13, wherein the sensor system is arranged to scan the inventory items in the storage locations to produce the image.

15. An inventory control process for monitoring the removal and replacement of inventory items, including providing a plurality of inventory item storage locations each for receiving a specific inventory item, generating an image of the inventory items using a sensor system, sending signals from the sensor system to a data processing device and comparing the generated image with previous images using comparator means to determine the presence and/or absence of the inventory items in the storage locations.

16. An inventory control process according to claim 15, wherein the inventory items are tools, and preferably hand tools.

17. An inventory control process according to any one of claims 15 or 16, wherein each inventory item storage location comprises an individually-shaped recess for receiving a specific inventory item, the shape of the recess being matched to the shape of the inventory item.

18. An inventory control process according to any one of claims 15 to 17, including using a sensor system having at least one array of sensors.

19. An inventory control process according to any one of claims 15 to 18, wherein the senor system is arranged to generate the image of the inventory items in the storage locations by scanning.

20. An inventory control process according to any one of claims 15 to 19, including recording the time of removal and replacement of inventory items.

21. An inventory control process according to any one of claims 15 to 20, including detecting and recording the identity of a user of the inventory items.

22. An inventory control process according to claim 21, including checking the identity of a prospective user against a list of authorised users and allowing access to the inventory items only if the prospective user is authorised.
